# EUROPEAN PATENT APPLICATION

(11) **EP 1 564 693 A2**
(43) Date of publication of application: **17.08.2005**
(21) Application number: 05405040.6
(22) Date of filing: 26.01.2005
(51) Int. Cl.: G07F 7/08, G07F 19/00

(54) **Group of linked devices for the recording and transmission of data**

(30) Priority: 13.02.2004 CH 2272004
(71) Applicant: Amodeo Salaris, Lorena, 6932 Breganzona (CH)
(72) Inventor: Amodeo Salaris, Lorena, 6932 Breganzona (CH)
(74) Representative: Fiammenghi-Domenighetti, Delfina

(57) **Abstract**

A group (10) of devices (1, 2, 3) situated in different locations, also distant from each other, is described, said devices being linked by means of the action of apparatus (1m, 2m, 3m, 1c, 2c, 3c, 1d, 2d, 3d, 4, 5, 6) with which they are equipped and which are able to perform the recording of data, the transmission and/or reception thereof as well as operations relating to the said data, the devices (1, 2, 3) being able to communicate with each other. In the group of devices according to the invention, the said apparatus (4, 5, 6) which perform the said transmission and/or reception use radio waves, deciphering of the transmitted data requiring decoding thereof performed in succession by special decoding units (1d, 2d, 3d) with which two devices communicating with each other are equipped.

## Description

The present invention relates to the sector of electronic equipment for the recording and transmission of mainly numerical data such as bank account numbers, account balances, etc., between private consumers (such as the actual user and/or a commercial enterprise) and an organization such as a bank where the user is the owner of an account in which a sum of money has been deposited.

In other words, the invention relates to the sector of so-called "electronic wallets", namely devices by means of which in the future it might be possible to avoid the user of paper money and coins.

If these devices were to be used the following advantages would in fact be obtained:
- a reduction in wasted paper and metal;
- fewer personnel required to manage money in general;
- faster transfer of capital;
- a reduction in the number of journeys made by persons to banks, post offices, etc.;
- fewer thefts.

According to the present state of the art there already exist constructional examples of devices of the type described above or, more specifically, of a group of such devices linked and connected together so as to be able to exchange data.

A constructional example of such a group consists of three devices, one of which is carried by the user, holder of an account at a bank, post office or the like, the second one of which is situated at the said bank or post office, and the third one of which is situated at a commercial enterprise (shop, cinema or the like) with which the abovementioned user has dealings involving payment.

In order to make such a payment, the said user operates the device which he/she is carrying and in which the availability of funds in his/her account is stored, transmitting the data for transfer of the necessary sum to the device at the commercial enterprise and to the device situated at the bank or post office where the funds have been deposited.

The transaction is thus performed and the devices of said group, which are equipped with electronic means for performing mathematical operations, record the results thereof, effecting a reduction in the amount of money available to user, which is also transmitted to the abovementioned bank or post office, and a corresponding increase in the funds owned by the said commercial enterprise. Usually all the necessary operations are performed by keying in numbers, letters and the various functions on a keypad with which the user's device (and also the other devices) are equipped.

The transfer of the data relating to each transaction is performed by means of signals transmitted via telephone, often by means of on-line connections to the Internet.

This, in the opinion of the inventor, represents an obstacle preventing the effective use of a group of the type described as an alternative to the use of paper money and coins: the connecting systems mentioned above are in fact unable to guarantee the confidentiality of the data involved in a transaction and are also potentially subject to abuse by third parties who may even appropriate the account funds recorded and stored in the devices.

In order to eliminate these drawbacks, the inventor of the present patent application has devised a group of devices of the type illustrated hitherto, which effect the reception and/or transmission of the data in coded form by means of equipment which are incorporated in the said devices and which use for this purpose radio waves at a predefined frequency. Since the data is transmitted in coded form, each device is equipped with a decoding device, possessing its own code, but such that complete deciphering of the transmitted data is possible only if said data is decoded in succession by the decoding units of the two devices communicating with each other.

A double safety feature is thus provided, similar to that obtained with the duplication of strongbox keys. These and other characteristic features of a group of devices according to the invention will be described more fully in the remainder of the present description.

The subject of the invention therefore consists in a group of devices situated in different locations which may also be distant from each other, as described in the accompanying Claim 1.

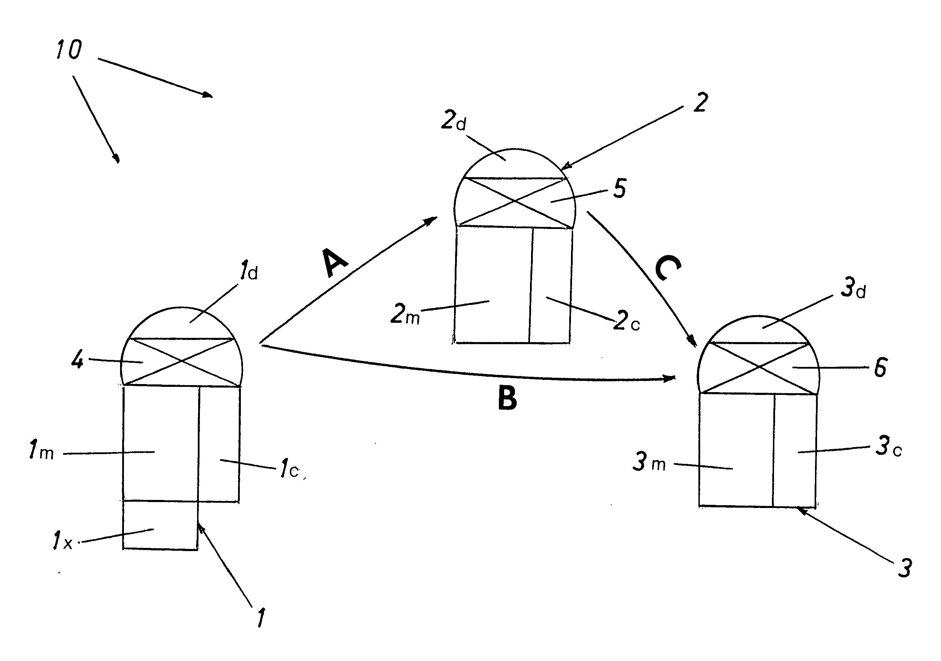

A more detailed description of a preferred example of embodiment of the group of devices according to the invention will now be provided, with reference also to the accompanying figure which shows a functional outline diagram of a preferred example of embodiment of the group in question.

It must be pointed out that, in the example of embodiment, a group composed of three linked devices, indispensable for concluding a transaction of the type illustrated above, is described. It is obvious that in reality a plurality of devices of each type will exist, and three of these, communicating with each other in each case, will constitute the above-described group formed by three devices.

In the figure three devices 1, 2 and 3 linked together so as to form a group 10 according to the invention are shown.

Each device is equipped with a transceiver apparatus 4, 5, 6 operating via radio waves and able to transmit the numerical data or other information supplied by the device to another device situated in a different location and a decoding device 1d, 2d, 3d capable, as mentioned, of partially decoding the data received and/or transmitted from or to another device.

Each of the three devices 1, 2, 3 is also equipped with a recording and memory unit 1m, 2m, 3m, in which data such as the availability of funds, the account number, etc., are stored, and a calculating unit 1c, 2c, 3c.

In the example considered, the device 1, which is in the possession of a generic user, also comprises a secret recording and memory module 1x able to interact with the said recording and memory unit 1m, exchanging data therewith. This secret module 1x, the data of which cannot be accessed by other devices, may be used as private purse or wallet in which the user is able to deposit funds drawn from the recording and memory unit 1m, without any unauthorized person being able to ascertain, either deliberately or accidentally, the details of the amount "contained" therein.

Recording of the data, storage thereof, the mathematical data processing operations as well as reception and transfer of the data by a device may be performed using a keypad of the known type. This keypad is not shown in the drawings since, in the said preferred example of embodiment, the inventor envisages performing the functions described above by means of voice commands, each device therefore being equipped with means of the known type able to recognize the user's voice, thus preventing others from using the device.

In the case where said keypad is present, the inventor suggests providing each device with an electronic protection system of the known type (also obviously not shown) which prevents operation of the keypad unless it is deactivated by the user who introduces personal identification data such as finger prints, a code or, again, a voice command.

Viewing the figure, it is simple to understand how the three devices 1, 2, 3 are linked together and how they function during a transaction: in the example in question the device indicated by the number 1 is available for use by its primary user, the device indicated by 2 is situated at a commercial enterprise (for example a shop), and the device indicated by 3 is situated at a bank, post office or the like.

The device 1 in possession of the user comprises a unit 1m for recording and storing the data (similar to that of computers) in which the figure corresponding to the available funds of the user in an account managed at the abovementioned bank is recorded, along with any other data. The device 1 also comprises, as mentioned, a secret recording and memory module 1x which is able to interact and exchange data with the abovementioned recording and memory unit 1m, and a calculating unit le which carries out operations both on the data recorded in the unit 1m and in the secret module 1x.

The data recorded in the recording and memory unit 1m may be transferred to a radio wave transceiver apparatus 4 incorporated within the device 1 and connected to a decoding unit 1d which partially decodes the radio signals emitted from the said apparatus 4 or the radio signals sent from another device. The devices 2, 3 situated in the shop and at the bank, which together with the device 1 of the primary user, form a group 10 according to the invention, are identical to the user's device already described and may, in the example illustrated, have a recording and memory unit 2m, 3m, a calculating unit 2, 3c, a radio wave transceiver apparatus 5, 6 equipped with the already illustrated decoding unit 2d, 3d, without necessarily having the abovementioned secret module, which, except in special cases, is required only in the primary user's device 1.

In order to make a purchase, for example, it is sufficient for the user, after checking on the recording and memory unit 1m of his/her device 1 that the necessary funds are available, to enter the corresponding payment as mentioned by means of a voice command or via a keypad. The component parts of the device 1 transfer the data of the payment (for example: amount and address or code of the beneficiary) to the transceiver apparatus 4 which emits a corresponding radio signal in coded form which is partially decoded by the associated decoding unit 1d and reaches the transceiver unit 5 of the device 2 in the shop and unit 6 of the device 3 situated at the bank, which devices, by means of the respective decoding units 2d, 3d, decode the remaining part of the radio signal received so as to allow uncoded reading by their respective recording and memory units 2m, 3m.

At the end of the operation, the calculating unit 1c, 2c, 3c of the three devices 1, 2, 3 have reduced the amount of the user's available funds indicated on the recording and memory unit 1m, 3m of his/her device 1 and on the unit 3 of the bank, deducting therefrom the payment made, and have increased the amount of the shop's available funds indicated on the respective recording and memory unit 2m.

The direction of propagation of the radio waves between the three devices 1, 2, 3 when performing the abovementioned transaction are indicated by the arrows A, B, C. The arrow C indicates, in particular, the direction of the waves transmitted by the device 2 of the shop to the device 3 of the bank in order to signal the increase in available funds of the shop as a result of the transaction performed. It is obvious that this occurs only if the shop is a client of that same bank.

The organization and management of the data and signals may obviously be performed also using methods and criteria different from that illustrated hitherto, depending on the needs and knowledge of the technical experts responsible for design of a group of devices provided in accordance with the invention.

The component parts of the devices may also be different or may be combined with other parts which perform further ancillary functions.

## Claims

1. Group (10) of devices (1, 2, 3) situated in different locations, also distant from each other, linked by means of the action of apparatus (1m, 2m, 3m, 1c, 2c, 3c, 1d, 2d, 3d, 4, 5, 6) with which they are equipped and which are able to perform the recording of data, the transmission and/or reception thereof as well as operations relating to the said data, the said devices (1, 2, 3) being able to communicate with each other, **characterized in that** the said apparatus (4, 5, 6) which perform the said transmission and/or reception use radio waves, deciphering of the transmitted data requiring decoding thereof performed in succession by special decoding units (1d, 2d, 3d) with which two devices communicating with each other are equipped.

2. Group of devices according to Claim 1, in which each device (1, 2, 3) comprises a decoding unit (1d, 2d, 3d), a recording and memory unit (1m, 2m, 3m), a calculating unit (1c, 2c, 3c) and a transceiver apparatus (4, 5, 6) which receives and/or transmits the data supplied by the memory unit to another device using radio waves at a predefined frequency.

3. Group of devices according to Claim 2, in which at least one (1) of the devices (1, 2, 3) also comprises a secret recording and memory module (1x) able to interact with the said recording and memory unit (1m), interchanging data therewith, the data recorded in this secret module (1x) being inaccessible for the other devices (2, 3).

4. Group of devices according to one of the preceding claims, in which recording of data, storage thereof, the mathematical data processing operations as well as reception and transmission of the data by a device is performed with the aid of a keypad with which each device is equipped.

5. Group of devices according to Claim 4, in which operation of the keypad of each device (1, 2, 3) is prevented by an electronic protection system which may be deactivated by the user of the device who introduces personal identification data.

6. Group according to one of Claims 1 to 3, in which recording of the data, the mathematical data processing operations as well as reception and transmission of the data by a device from and to another device is performed by means of a voice command, each device being equipped with means able to recognize the user's voice, preventing others from using the device.
